Europäisches Patentamt

European Patent Office

Office européen des brevets

(11) Publication number: 0 398 545
A1

# EUROPEAN PATENT APPLICATION

(21) Application number: 90304753.8

(22) Date of filing: 02.05.90

(51) Int. Cl.⁵: **G11C 7/00, G11C 16/06**

(30) Priority: 19.05.89 US 353939

(43) Date of publication of application:
22.11.90 Bulletin 90/47

(84) Designated Contracting States:
DE GB IT

(71) Applicant: DELCO ELECTRONICS
CORPORATION
700 East Firmin Street
Kokomo Indiana 46902(US)

(72) Inventor: Lippmann, Raymond
2426 Whitmore Lake Road
Ann Arbor, Michigan 48105(US)
Inventor: Schnars, Michael John
5055 Mohawk
Clarkston, Michigan 48016(US)

(74) Representative: Denton, Michael John et al
Patent Section Vauxhall Motors Limited 1st
Floor Gideon House 26 Chapel Street
Luton Bedfordshire LU1 2SE(GB)

(54) Method and apparatus for storing data in a non-volatile memory.

(57) A memory has at least two data word locations and a single bit location corresponding to each word location. A flag written in the single bit location marks the most recent valid data. New data is written to an unmarked location and marked by a flag and then the former flag is erased. Erase and write sequences are interrupted whenever there is danger of a writing error so that more than one flag may result. An arbitration circuit determines which flag marks the most recent reliable data.

EP 0 398 545 A1

## METHOD AND APPARATUS FOR STORING DATA IN A NON-VOLATILE MEMORY

This invention relates to a method and apparatus for storing data in a non-volatile memory locations and particularly to such method and apparatus requiring no auxiliary energy storage.

In a motor vehicle, it is often necessary to memorize data in low power volatile or nonvolatile memories (NVM). In particular, odometer information in electronic instrument clusters is stored in nonvolatile memories. These non-volatile memories may be stand-alone devices or they may be non-volatile random access memories like those in microprocessor based clusters. It is extremely important that the odometer information be free from distortion since vehicle warranty can be based on accumulated mileage.

To write data into a memory location in a nonvolatile device, the location must first be erased. This task typically requires relatively high voltages (15 to 25 Volts) which in most devices is generated on the silicon memory device by means of capacitive voltage multipliers. After a location has been erased, data to be stored is presented to the memory location, and by means of another high voltage pulse, the data is fixed in a semipermanent state -one which does not rely on the device being powered to retain the data. The time required to erase or write data into a nonvolatile memory location may be as long as 25 milliseconds. Thus, a complete erase/write cycle may have a duration of 50 milliseconds. At any time during a typical erase/write cycle, if power is interrupted or a circuit malfunction occurs, data may be lost. Thus, saving the data in those circumstances is important. The following techniques have commonly been used to accomplish this goal.

In the specific case of electronic odometer circuits, it is usually important that current drains be minimized when the vehicle is not powered, implying that power is removed from circuits when the car is switched off. Since vehicle power can be turned off at any time, circuits must be provided to sense when power is about to be interrupted. When an interruption is imminent, the device must immediately save volatile data. Power supply voltages must be maintained to NVM devices until the data has been saved (up to 50 milliseconds). Relatively large numbers of components are needed to perform these activities, adding cost and decreasing reliability. Examples of known arrangements are shown in US Patent Nos. 4,665,497 and 4,803,646.

Nonvolatile memory cells often have limited data retention times which are dependent on the number of times that individual cells have undergone erase/write cycles. For this reason, in many applications multiple memory banks are provided -after one bank has been erased and written enough times so that retention goals are no longer met, another bank is used in its place.

It is therefore an object of the invention to provide a method and apparatus for ensuring integrity of data written to a nonvolatile memory without maintaining an auxiliary power source.

The invention is carried out by the method of storing data in a nonvolatile memory comprising the steps of marking the most recent valid data entry in a first memory location with a flag bit at the first memory location; addressing a new memory location sequentially following the location marked with the flag bit; erasing the new memory location; writing the new data into the new memory location; then marking the new location with a flag bit; and erasing the flag bit from the first memory location, whereby the data associated with the remaining flag bit is recognized as the most recent valid data entry.

The invention is also carried out by apparatus for storing data in a nonvolatile memory under conditions conducive to errors in writing comprising a memory having a sequence of memory locations, each location having room for a data word and a flag, a flag being present at the current location containing the most recent valid data; means for furnishing data to the memory; means for generating a write signal; means effective during a write signal for determining the current location marked by a flag and the next location in the sequence of locations; means for writing new data from the furnishing means to the next location; and means for writing a flag to the said next location and subsequently erasing the flag at the said current location, whereby the most recent valid data is marked by a flag.

The present invention will now be described, by way of example, with reference to the following description taken in conjunction with the accompanying drawings wherein like references refer to like parts and wherein:-

Figures 1a through 1e are memory diagrams illustrating the method of the invention;

Figure 2 is a block diagram of apparatus for carrying out the method of the invention;

Figure 3 is a schematic diagram of a nonvolatile memory and associated control circuit according to the invention;

Figure 4 is a schematic diagram of the flag decode module of Figure 3;

Figure 5 is a schematic diagram of the word select module of Figure 3; and

Figure 6 is a signal timing diagram of signals in the circuit of Figure 3.

Although the apparatus described below may be implemented in discrete form, it is disclosed in the form of a single integrated circuit. The method and apparatus are described in terms of nonvolatile memory although the techniques can be used to enhance the data integrity in volatile memories.

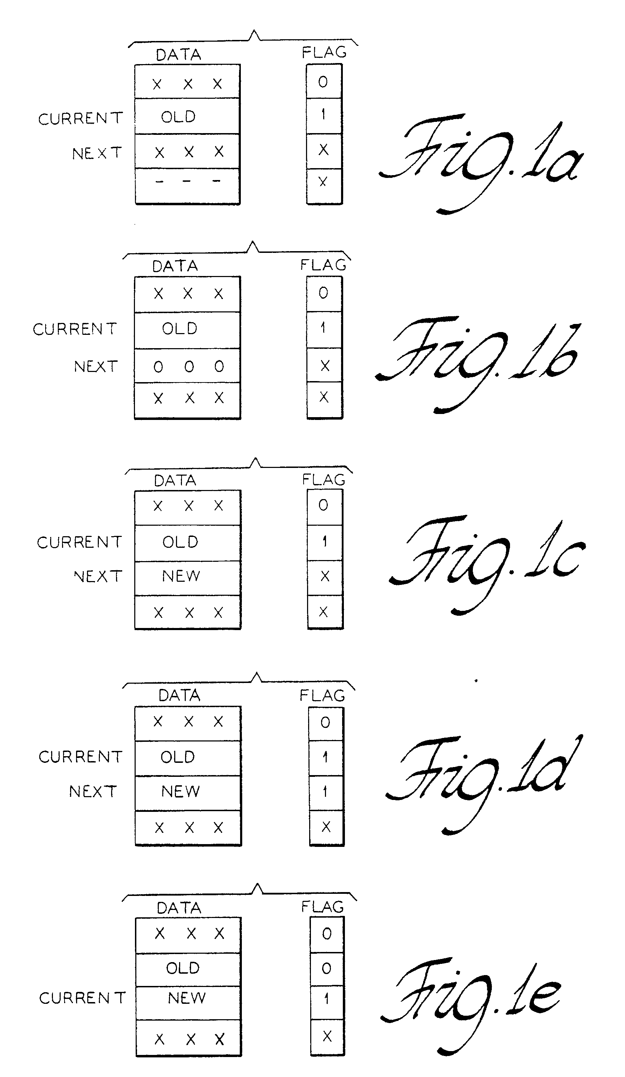

In this method, each word of data to be stored is contained in one of at least two memory locations reserved for that word. Further, each location has one more bit than is required to hold the data. The extra bit is used as a status flag to determine the state of the sequence of operations used in writing data. For example, if an NVM device is to store a single 8 bit word of information, then at least two independent 9 bit storage locations must be provided. The additional flag bit associated with each storage location can be independently erased and written. In the example in Figure 1, four locations are provided for a word of data to be stored.

The flag bits are used to determine which location in the memory bank contains valid stored data and which location is to be used to store new, updated data. If interference occurs in the sequence of events used to write new data, then the flag bits indicate the location of the last data written which has integrity. In the event that power loss or other interference occurred before or while data was being stored, then old data is maintained. It is reasonably assumed that only the last attempt to write to a nonvolatile location may have been corrupted by abnormal conditions if a means is provided to detect when conditions are not favorable for writing (that is, low supply voltages) and the erase/write sequence is immediately aborted.

One implementation is described using Figure 1. An 8 bit word of data is to be stored in nonvolatile memory. To ensure the desired retention time for the required number of erase/write cycles, a bank of 4 locations is provided to store the data word, with each location having 9 memory bits. In each location, 8 of the 9 memory bits are erased and written at one time and the remaining bit (the flag bit) can be independently written and erased. Unknown or irrelevant data or flag bits are indicated as x's. In this example, the locations in the memory bank are used in rotational sequence; the first location is considered to follow the last location.

The flag bit is used to determine which of the positions in the memory bank contains valid data (Figure 1a) - the flag for that location is in the SET state. If more than one flag is SET, then some form of arbitration is required. In this example, if only the top and bottom flags are SET, the bottom flag is valid; in all other cases the topmost SET flag is considered to be valid and other SET flags are considered to be faulty. Using these rules, data is always read from the position pointed to by the first SET flag, but for the one exception just described.

That position is here called CURRENT and contains valid old data. The following position is called NEXT and will receive new data. If no flag is SET then any location may be chosen as being CURRENT, with the one following it being NEXT. This situation may exist when the device is first used, or in the case of severe malfunctions.

After the current location is identified, the location NEXT is erased (Fig. 1b), and then the new data is written into it (Fig. 1c). Following this, another write cycle sets the flag corresponding to location NEXT (Fig. 1d). At this point, new data has been written into memory, a flag bit has been set corresponding to the location containing the new data, and the old data and its flag are still valid. The final step in the sequence is to clear the flag for the old data location (Fig. 1e). This action changes the CURRENT location which will be recognized to contain valid data.

Since writing or erasing data or flag bits can be aborted in mid-activity, it can never be assumed that the last item modified is valid. For example, if a write activity is stopped prematurely, a bit may be changed to a SET state, but it may not be stable and may revert to its original RESET a while later. Using the method described above, if the sequence is aborted at any time the original, uncorrupted data is used. For example, if the last step which resets the flag for location CURRENT is aborted, three situations may occur: (1) the reset state may be poorly written and may revert; (2) the flag may not be RESET at all; (3) the flag may be properly reset. For any of these cases, the data in both locations CURRENT and NEXT have been validly written and may be used. If the flag in location CURRENT is properly a RESET, the location NEXT will be recognized to contain valid data. If the flag for the CURRENT location is SET (or reverts to a SET because of a poor erase sequence) then location CURRENT will be recognized to contain the most recent valid data. For an odometer updated at small distance increments, this would be a negligible error. This is a very conservative approach which assumes the NEXT data may possibly have been corrupted even though the associated flag has been set.

An alternative, less conservative approach is to accept the NEXT data if its corresponding flag has been set since it is very probably valid. Thus the presence of two flags at the time of aborting can be interpreted as a corruption of the flags only since the data writing to NEXT had been completed prior to changing the flags. In this case the most recent data stored in NEXT is recognized as valid data.

Other permutations in writing and resetting flags are also possible. A key point is that flags are used to mark the activities performed in storing data, and the sequence in setting and resetting flags is such that if a poor write or erase occurs, the loss of integrity will always be associated with the state of the flags and not with the data. Furthermore, the flags in any situation correctly mark the best valid data available. Secondarily, in the event that two pointer flags are SET or no flags are SET some means of arbitration is provided.

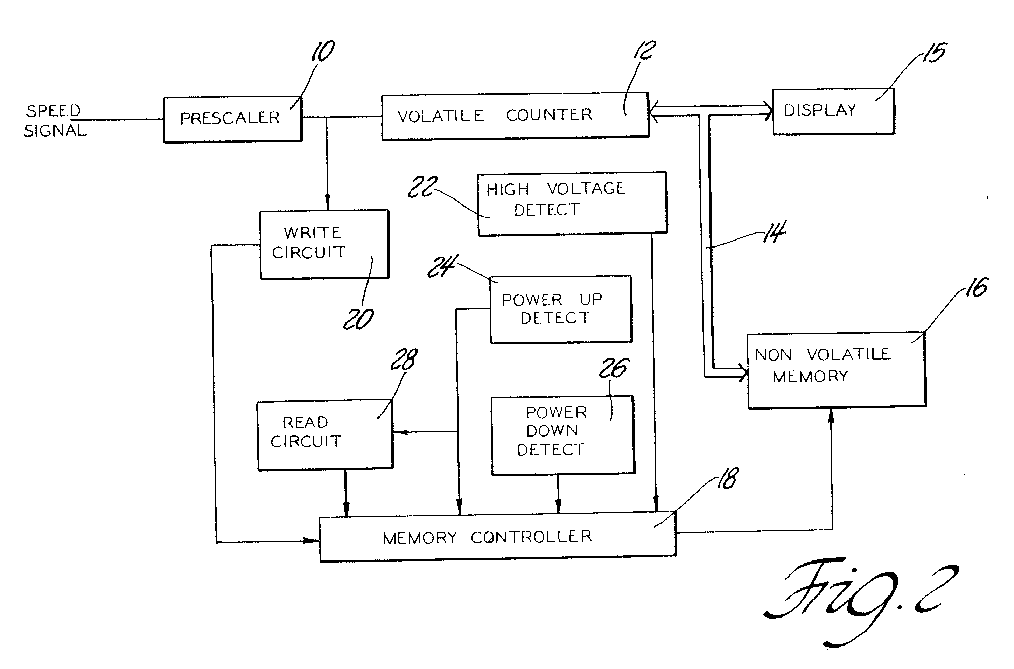

Figure 2 is a block diagram of a typical odometer or other counter system which may employ the method of the invention. An event sensor such as a speedometer pickup provides a speed signal which is a series of pulses to a prescaler 10 which is a divider for converting the speed signal to convenient distance increments such as 0.1km or 0.1 mile. Each prescaler output is fed to a volatile counter 12 and the accumulated count represents the total distance recorded by the odometer. The volatile counter 12 is connected by a data bus 14 to a display 15 and a nonvolatile memory 16. A memory controller 18 is connected to the non-volatile memory 16 to manage the operations in the nonvolatile memory 16. A write circuit 20 has an input from the volatile counter 12 and its output is coupled to the memory controller 18. A high voltage detect circuit 22, a power up detect circuit 24 and a power down detect circuit 26 provide inputs to the memory controller 18 and a read circuit 28 having an input from the power up detect circuit 24 also provides an input to the memory controller 18.

In operation, the power up detect circuit 24 provides a signal when the vehicle is started and voltage applied to the apparatus has become sufficiently stable to support reliable memory operations. The signal triggers a read signal from the read circuit 28 which tells the memory controller 18 to cause data to be read from the nonvolatile memory 16 and loaded into the volatile counter 12. The memory controller 18 must determine from the flag locations where the most recent valid data is stored and cause that data to be read. The display 15 always shows the contents of the volatile counter 12. During vehicle travel, the volatile counter 12 contents are written to the non-volatile memory 16 on the basis of elapsed distance increments. The write circuit 20 is sensitive to the prescaler 10 output pulses representing 0.1km or 0.1 mile increments and sends a write signal to the memory controller 18. Then the memory controller 18 causes a memory location to be erased and the volatile counter 12 contents to be written into the location. The memory controller 18 also manages the writing and erasing of flags at the active memory locations as discussed above to identify the most recent valid data. The high voltage detect circuit 22 monitors the high voltage which is needed for the write and erase operations in the nonvolatile memory 16. The power down detect circuit 26 monitors the voltage supplied to the apparatus to determine impending power loss. When either voltage is found to be low, the write operation is immediately suspended. The signals from the three detect circuits 22, 24 and 26 are low when the respective conditions are safe for a write and erase operation.

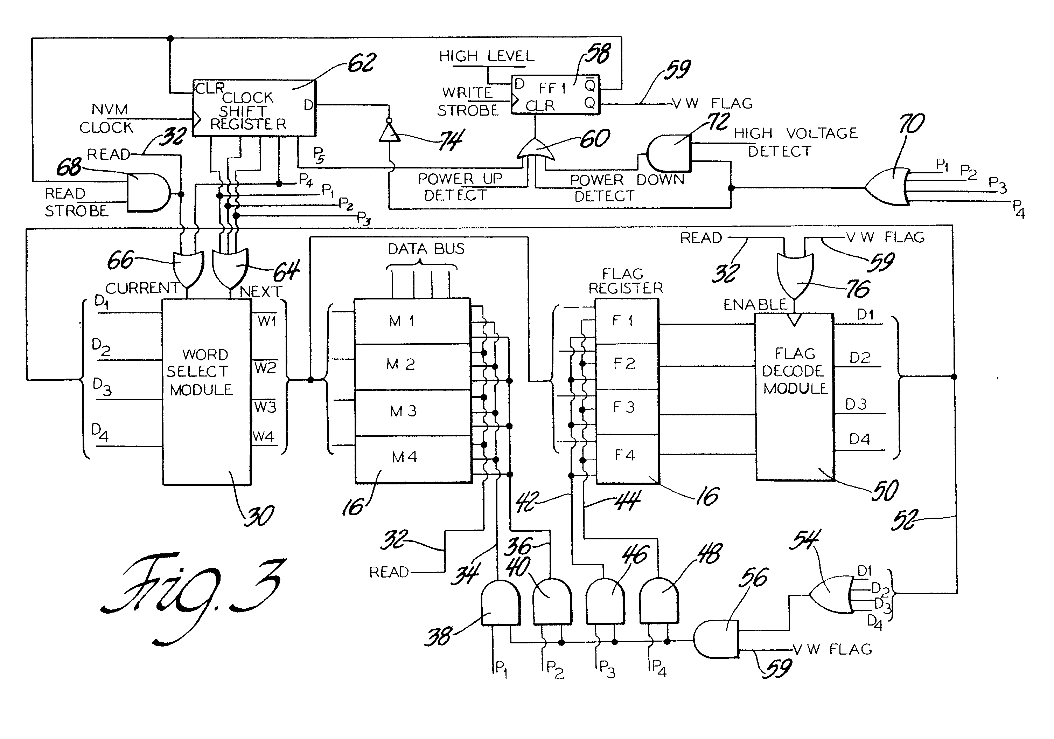

The memory controller 18 and nonvolatile memory 16 are shown in Figure 3. The nonvolatile memory 16 bank has data locations M1 through M4 and corresponding flag locations F1 through F4. These locations are addressed by a word select module 30. The data locations are all accessed by the data bus 14 and are connected to read control line 32 and erase and write control lines 34 and 36 which are output from AND gates 38 and 40, respectively. The flag locations F1 - F4 are connected to write and erase control lines 42 and 44 which are output from AND gates 46 and 48. The flag locations are accessed by a flag decode module 50 which is a logic circuit for determining which data location represents the most recent valid data. The outputs of the flag decode module 50 are carried by lines 52 to the inputs of the word select module 30 and to an OR gate 54 which is coupled through an AND gate 56 to inputs of the AND gates 38, 40, 46 and 48. A flip/flop 58 has a high logic level connected to the data input, a write strobe from the write circuit 20 connected to the clock input and an OR gate 60 connected to the clear pin. The Q output on line 59 is called the volatile write flag or VW flag. The Q-complement (Q*) output is connected to the clear pin of a clock shift register 62 which has an NVM clock signal coupled to its clock input, and has outputs P1 - P5 which are sequentially pulsed by advancing a high logic level which is applied to the data input only when the outputs P1 - P4 are at a low level. The outputs P1 - P3 are coupled to the inputs of an OR gate 64 and output P4 is coupled to OR gate 66, both OR gates 64, 66 being input to the word select module 30. The Q* signal and a read strobe signal from the read circuit 28 are connected to an AND gate 68 which forms a read signal on read control line 32 which is coupled to the OR gate 66. The outputs P1 - P4 are coupled to inputs of the AND gates 38, 40, 46 and 48, as well as to OR gate 70. OR Gate 70 has its output connected to an input of an AND gate 72 and through an inverter 74 to the data input of the clock shift register 62. The high voltage detect signal from high voltage detect circuit 22 forms another input of the AND gate 72. The output of AND gate 72 goes to an input of OR gate 60 along with P5, the power down detect signal from power down detect circuit 26 and the power up detect signal from power up detect circuit 24. The VW flag is an input of the AND gate 56 and is an input of an OR gate 76 along with the read signal from the AND gate 68. The output of the OR gate 76 provides an enable signal to the flag decode module 50.

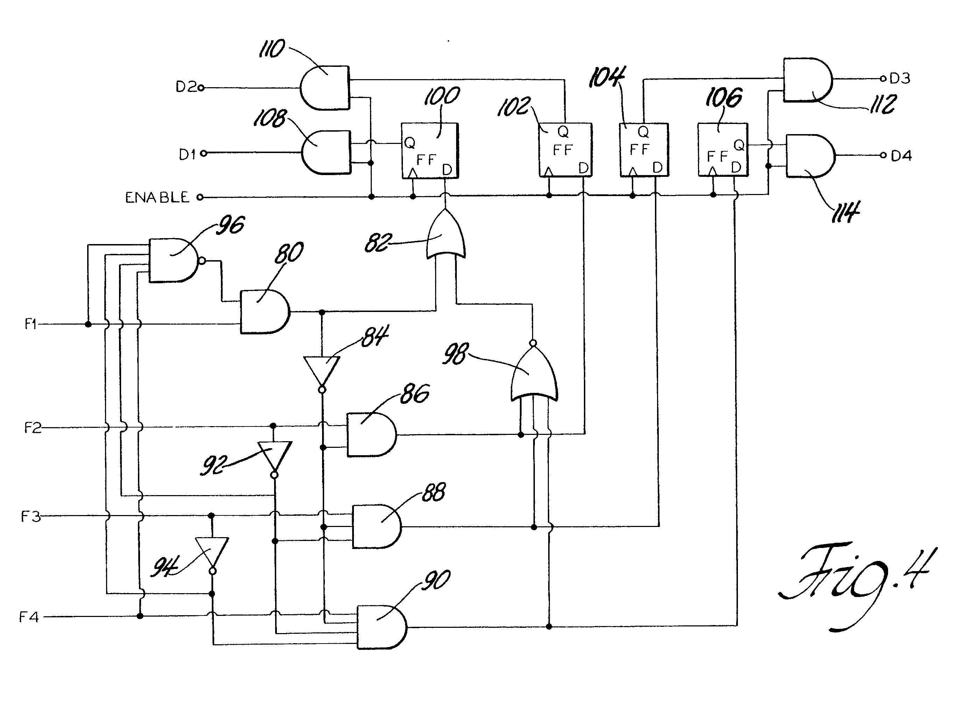

The flag decode module 50, as shown in Figure 4, is a logic circuit having the flag locations F1 - F4 as inputs and decoded signals D1 -D4 as outputs. The circuit will, when enabled by OR gate 76, apply a logic 1 to the output corresponding to the CURRENT memory location and a logic 0 to the other outputs. The flag location F1 is coupled to AND gate 80 which has its output connected to inputs of OR gate 82 and an inverter 84. The flag locations F2 - F4 are connected to AND gates 86, 88 and 90, respectively, and the inverter 84 output is connected to the same gates. An inverter 92 has F2 as its input and the output is coupled to AND gates 88 and 90. An inverter 94 has F3 as its input and AND gate 90 connected to its output. The inverter 92 and 94 outputs are the complements of the inputs and are denoted F2* and F3*, respectively. A NAND gate 96 has inputs comprising F1, F2*, F3* and F4 and its output goes to an input of AND gate 80. The outputs of AND gates 86 - 90 are inputs of a NOR gate 98 which has its output coupled to an input of OR gate 82. OR gate 82 output is connected to the data input of a flip/flop 100. The AND gate 86 - 88 outputs are coupled to data inputs of flip/flops 102, 104 and 106, respectively. The data is latched in flip/flops 100 - 106 by the rising edge of the same enable line and their outputs are fed to inputs of AND gates 108 - 114, respectively which also have inputs connected to the enable line and have outputs D1 - D4 respectively.

When only one flag among F1- F4 is SET, the corresponding decode output is SET. In case more than one flag is SET, the decoder circuit will arbitrate. The decoder circuit always selects the uppermost SET flag, as viewed in Figure 4, as the CURRENT position, except when F1 and F4 are SET and F2 and F3 are RESET. In that case, all inputs to NAND gate 96 will be high and its output will be low to turn off AND gate 80. Then all inputs to the AND gate 90 will be high and its output will be high to cause D4 to be SET. When F2 - F4 are low, NOR gate 98 goes high to cause D1 to be SET irrespective of the state of F1. Thus D1 is selected as a default when the circuit is first used or all flags are RESET (or all SET) for any reason. Thus, the logic elements 80 - 98 make the decision of which flag represents the CURRENT data location. The elements 100 - 114 output that decision upon the rising edge of the enable signal and retain the same state until the enable signal is removed, even if the flags change state in the meantime. When the enable signal is removed, the AND gates 108 - 114 are turned off so that all outputs D1 - D4 are RESET.

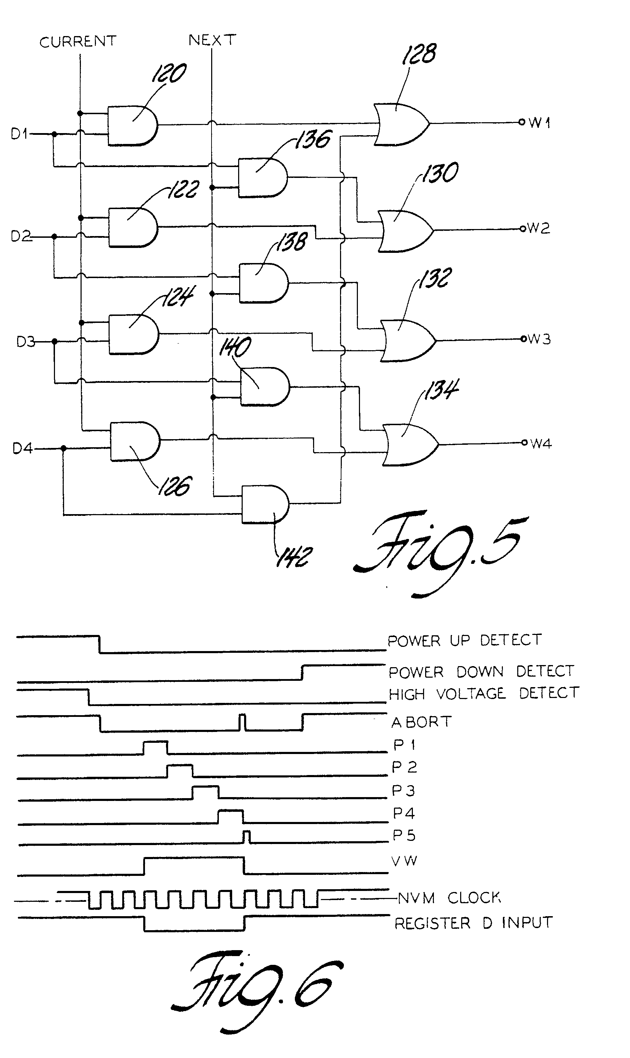

The word select module 30, as shown in Figure 5 has mutually exclusive CURRENT and NEXT control signals from the OR gates 66 and 64, respectively, and D1 - D4 inputs from the flag decode module 50. AND gates 120 through 126 have inputs D1 - D4 respectively, as well as the CURRENT control signal. The AND gate outputs are coupled to the inputs of OR gates 128 - 134, respectively, which have outputs W1 - W4, respectively, which address the NVM data locations in the nonvolatile memory 16. Further AND gates 136 - 142 have inputs connected to D1 - D4 as well to the NEXT control signal. The outputs of AND gates 136 to 140 are connected to OR gates 130 to 134 while the output of AND gate 142 is coupled to the input of OR gate 128. Thus, when the CURRENT control signal is applied, any of the decode signals D1 - D4 will be directly applied to the corresponding output W1 - W4. On the other hand, when the NEXT control signal is present, any of the signals D1 - D4 are applied to the next output in the rotation sequence.

The apparatus operation will be explained with reference to Figure 3. When a write strobe signal is received, the flip/flop 58 will generate the VW flag providing that an abort signal is not present on the clear input. If an abort signal is present the VW flag is not permitted and if the VW flag was already present it will immediately be terminated. An abort signal is produced by the OR gate 60 when any input thereof goes high. That occurs when the P5 signal is produced, the power up or power down detect circuits 24,26 show that the voltage conditions are not safe for reliable writing to memory, or the AND 72 output goes high due to the lack of high voltage during the presence of one of the pulses P1 - P4. The VW flag, when present, enables the flag decode module 50 to determine the CURRENT memory location and, via AND gate 56, enables the memory erase and write lines to respond to the pulses P1 - P4. Just before the VW flag is generated, the Q* signal will be high to clear the clock shift register 62. The data input to the clock shift register 62 will then be high. When the VW signal appears and the Q* signal goes low, the NVM clock signal will cause the high input to appear at the P1 pin.

As shown in the diagrams of Figure 6, the data input will then go low due to the effect of P1 on OR gate 70 and the inverter 74. The next few clock pulses will cause the high level signal to be shifted from the P1 pin to the pins P2 - P5, in succession and to be replaced, in turn, by a low level signal because the data input signal is low. During the P1, P2 and P3 pulses, the OR gate 64 will output a high level signal to enable the word select module 30 to access the NEXT data word and corresponding flag location. P1 is effective through AND gate 38 to erase the NEXT data location and then the pulse P2 is effective through AND gate 40 to write into the NEXT location. P3 is then able to write to or SET the NEXT flag location via AND gate 46. When P4 is set high, OR gate 66 is energized to enable the CURRENT word selection and, via AND gate 48, erase the flag for the CURRENT word. When P5 goes high the OR gate 60 also goes high to abort the VW flag and end the erase/write sequences. At any time during the sequences, undesirable voltage conditions reflected at the input of OR gate 60 will cause immediate termination of the procedure. When the procedure is repeated, at a later time, it will start from the beginning.

To read the NVM data into the volatile memory at start-up, the flip/flop 58 will have been cleared due to the power up detect signal acting through the OR gate 60. Then the Q* signal will be high. When the read strobe is applied by the read circuit 28 to the AND gate 68, the output on read control line 32 will go high to activate the OR gates 66 and 76 to enable the selection of a CURRENT word and the reading of that word from the memory to the data bus 14 where it is available to the volatile counter 12. The read strobe is locked out when the VW flag is present because the data bus is busy during the write function and cannot be used for a read function at the same time.

## Claims

1. A method of storing data in a nonvolatile memory (16) comprising the steps of marking the most recent valid data entry in a first memory location with a flag bit representing the first memory location; addressing a new memory location sequentially following the location marked with the flag bit; erasing the new memory location; writing the new data into the new memory location; then marking the new location with a flag bit representing the new location; and erasing the flag bit from the first memory location, whereby the data associated with the remaining flag bit is recognized as the most recent valid data entry.

2. A method as claimed in Claim 1, including the steps of detecting conditions which may cause erroneous data entry; and aborting the entry process as soon as such a condition is detected, whereby more than one flag may be present when the data storing process is terminated.

3. A method as claimed in Claim 2 including the capability of reading the most recent valid data when two locations are marked with a flag, comprising the steps of determining the memory locations marked with a flag; selecting the marked location having the least recent data as determined by the relative positions of the flags; and reading the data from the selected location.

4. A method as claimed in Claim 2 including the capability of reading the most recent valid data when more than one location is marked with a flag, comprising the steps of determining the memory locations marked with a flag; selecting the marked location having the most recent data as determined by the relative positions of the flags; and reading the data from the selected location.

5. Apparatus for storing data in a nonvolatile memory under conditions conducive to errors in writing comprising a memory having a sequence of memory locations, each location having room for a data word and a flag, a flag being present at the current location containing the most recent valid data; means for furnishing data to the memory; means for generating a write signal; means effective during a write signal for determining the current location marked by a flag and the next location in the sequence of locations; means for writing new data from the furnishing means to the next location; and means for writing a flag to the said next location and subsequently erasing the flag at the said current location, whereby the most recent valid data is marked by a flag.

6. Apparatus as claimed in Claim 5 including means for sensing a condition conducive to a writing error; and means effective when the said condition is sensed for disabling the writing means so that any data written before the flag is erased at the said current location is not recognized as valid data.

7. Apparatus as claimed in Claim 5 including means for sensing a condition conducive to a writing error; and means effective when the said condition is sensed for disabling the writing means so that any data written before the flag is written at the said next location is not recognized as valid data.

8. Apparatus for storing data in a nonvolatile memory under conditions conducive to errors in writing comprising a memory having a plurality of memory locations used in sequence as a current location containing the most recent valid data and the subsequent location designated as the next location to receive new data, each location having room for a data words and a flag, a flag being present at the current location containing the most recent valid data; means for furnishing data to the memory; means for generating a write flag; means effective during the write flag for generating a sequence of command pulses to effect clearing the next location, then writing to the next location, then setting a flag at the next location, and then clearing the flag at the current location; addressing means enabled by the write flag and responsive to the command pulses for addressing respectively the current location marked by a flag and the next location in the sequence of locations; and means responsive to respective command pulses for effecting clearing and writing data in the next location, setting a flag at the next location, and finally clearing the flag at the current location, whereby the most recent valid data is marked by a flag.

9. Apparatus as claimed in Claim 8 including means effective when the write flag is not present and a read command is present for enabling the addressing means to address the current location; and means for reading the current location.

10. Apparatus as claimed in Claim 8 including means for detecting a condition conducive to writing errors and generating an abort signal; and means responsive to the abort signal for removing the write flag whereby the command pulse generating means is disabled and data entry and flag changing are aborted.

Fig.1a

Fig.1b

Fig.1c

Fig.1d

Fig.1e

Fig. 2

*Fig. 3*

EP 0 398 545 A1

Fig.4

EP 0 398 545 A1

Fig.5

Fig.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| Y | US-A-4 780 855 (N. IIDA et al.)<br>* Figure 1; column 3, lines 8-53;<br>column 5, line 55 - column 6, line 40 * | 1,5,8,9 | G 11 C    7/00<br>G 11 C    16/06 |
| A | | 2-4,6,7,10 | |
| | --- | | |
| Y,D | US-A-4 803 646 (M. BURKE et al.)<br>* Column 1, line 59 - column 2, line 5;<br>column 3, lines 56-62; column 6, line<br>36 - column 7, line 15 * | 1,5,8,9 | |
| | --- | | |
| A | US-A-4 447 887 (R. IMAZEKI et al.)<br>----- | 1,5,8 | |

TECHNICAL FIELDS
SEARCHED (Int. Cl. 5)

G 11 C    7/00
G 11 C    11/41
G 11 C    16/02
G 11 C    16/06

The present search report has been drawn up for all claims

| Place of search | Date of completion of the search | Examiner |
|---|---|---|
| THE HAGUE | 31-08-1990 | KAMSAETER K.M.S. |